# EUROPÄISCHE PATENTSCHRIFT

(11) **EP 0 704 232 B1**
(45) Veröffentlichungstag und Bekanntmachung des Hinweises auf die Patenterteilung: **14.01.1998**
(21) Anmeldenummer: 94810564.8
(22) Anmeldetag: 28.09.1994
(51) Int. Cl.: B01D 3/00, B01D 53/18, C10G 49/00, F28F 25/04

(54) **Flüssigkeitsverteiler für Kolonnen**
Liquid distributor for columns
Dispositif de distribution de liquide pour colonne

(43) Veröffentlichungstag der Anmeldung: 03.04.1996
(73) Patentinhaber: Sulzer Chemtech AG, 8404 Winterthur (CH)
(72) Erfinder: Ulrich, Herbert, CH-8356 Ettenhausen (CH); Fehr, Emil, CH-8415 Berg am Irchel (CH)
(74) Vertreter: Heubeck, Bernhard

(56) Entgegenhaltungen:
- EP-A- 0 112 978
- EP-A- 0 501 615
- DE-B- 1 156 428
- FR-A- 2 691 372
- US-A- 4 816 191

## Beschreibung

Die Erfindung betrifft einen Flüssigkeitsverteiler für Kolonnen gemäss Oberbegriff von Anspruch 1. Ein derartiger Flüssigkeitsverteiler ist beispielsweise für Stoff- und Wärmeaustauschkolonnen vorgesehen oder auch für katalytische Festbettreaktoren.

Aus der DE-PS 27 52 391 ist eine derartige Verteilvorrichtung bekannt. Sie besteht aus parallel zueinander angeordneten 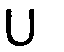 -förmigen, oben offenen Rinnen, die am oberen Rand der hochstehenden Schenkel 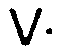 -schlitzförmige Flüssigkeits-Austrittsöffnungen haben. Vor den Austrittsöffnungen befinden sich in einem geringen Abstand zu diesen durchgehende Leitwände. Für die Verwendung dieser Vorrichtung im Niedriglastbereich ist es vorgesehen, beispielsweise ein Drahtgewebe in den Spalt zwischen Leitwand und Rinnenschenkel einzulegen, über welches die Flüssigkeit aufgrund von Kapillarkräften über den Spalt verteilt wird. Da diese bekannte Vorrichtung im wesentlichen ein Überlaufsystem ist und daher auf Schiefstellungen sehr empfindlich ist, erweist es sich als praktisch unmöglich, vorbestimmbare Mengen an Flüssigkeit über die einzelnen Austrittsöffnungen abzugeben.

Bei anderen bekannten Flüssigkeitsverteilern (siehe z.B. CH-PS 658 198 = P.5779), bei denen die Austrittsöffnungen lochförmig sind und eine treibende Druckdifferenz mittels Aufstauens der Flüssigkeit erzeugt wird (Stauhöhe mindestens rund 25 mm), ist zwar die pro Loch abgebenene Flüssigkeitsmenge gut vorgebbar. Aber im Niedriglastbereich lassen sich diese Vorrichtungen nicht verwenden, da mit ihnen eine ausreichende Anzahl Tropfstellen pro Flächeneinheit nicht herstellbar ist.

Die Anforderung an einen Niedriglastverteiler ist, dass mit ihm stündlich eine Minimalmenge von 25 l/m² gleichmässig über den Kolonnenquerschnitt auf eine Kolonnenpackung verteilt werden kann. Dabei versteht man unter "gleichmässig", dass die Flüssigkeit - abhängig von der Feinheit der Packungsstruktur - über mindestens 80 bis 200 Tropfstellen pro Quadratmeter des Kolonnenquerschnitts zugeführt wird.

Der Lochdurchmesser soll aus verschiedenen Gründen - beispielsweise wegen der Gefahr von Verstopfung durch Schmutzpartikeln, die sich in der zu verteilenden Flüssigkeit befinden - eine Mindestgrösse nicht unterschreiten. Aus Gründen der Herstelltechnik und der Ausströmbedingungen liegt die untere Grenze für den Lochdurchmesser bei etwa 1.5 mm. Dies bedeutet, dass sich bei einer Stauhöhe von 25 mm eine Ausflussmenge von rund 3 l/h ergibt. Für den Extremfall mit mindestens 200 Tropfstellen/m² und 25 l/m²h (oder pro Tropfstelle 0.125 l/h) heisst dies, dass jeder Austrittsöffnung mindestens 24 Tropfstellen zugeordnet sein müssen.

Es ist Aufgabe der Erfindung, einen Niedriglastverteiler zu schaffen, mit dem eine gleichmässige Verteilung für den oben genannten Extremfall herstellbar ist. Diese Aufgabe wird durch die Merkmale des Anspruchs 1 gelöst.

Ähnlich wie in der DE-PS 27 52 391 ergibt sich die Feinverteilung aufgrund von Kapillarkräften. Anders ist allerdings, dass die Verteilung über eine Verteil- und Abfliesszone erfolgt, die sich entlang einer horizontalen, geschlossenen Kurve erstreckt. Dank dieses Merkmals, dass nämlich die genannte Kurve geschlossen ist, ergeben sich keine Randeffekte, die zu einer Abweichung von der Gleichverteilung führen könnten.

Es hat sich überraschenderweise gezeigt, dass eine gute Verteilung auch ohne Aufstauen von Flüssigkeit im Feinverteilelement herstellbar ist. Dank dieser Eigenschaft funktioniert das Feinverteilelement über einen breiten, mindestens eine Grössenordnung umfassenden Lastbereich.

Der untere Rand der Leitwand verläuft vorzugsweise parallel zur genannten Kurve der Verteil- und Abfliesszone; dann sind die Tropfstellen praktisch kontinuierlich über den unteren Rand der Leitwand verteilt, so dass das Erfordernis bezüglich Anzahl Tropfstellen erfüllt ist. Der untere Rand kann auch gezackt sein; dann entspricht jedem Zacken eine Tropfstelle und somit lässt sich die Anzahl der Tropfstellen durch die Anzahl der Zacken vorgeben.

Die abhängigen Ansprüche 2 bis 14 beziehen sich auf vorteilhafte Ausführungsformen des erfindungsgemässen Flüssigkeitsverteilers. Der Anspruch 15 hat eine Kolonne mit erfindungsgemässen Flüssigkeitsverteilern zum Gegenstand.

Nachfolgend wird die Erfindung anhand der Zeichnungen näher erläutert. Es zeigen:
- Fig. 1: eine Draufsicht auf einen erfindungsgemässen Verteiler, ausschnittsweise dargestellt,
- Fig. 2: ein Schrägbild eines Feinverteilelements,
- Fig. 3: einen Längsschnitt durch ein Feinverteilelement gemäss Fig.2,
- Fig. 4: ein Detail zu einer zweiten Ausführungsform des erfindungsgemässen Verteilers,
- Fig. 5: ein plattenförmiges Element des Feinverteilers, mit Durchbrüchen,
- Fig. 6: einen Querschnitt durch den Boden einer Verteilerrinne,
- Fig. 7: einen Ausschnitt aus einer Anordnung von Feinverteilelementen besonderer Formgebung,
- Fig. 8: eine Variante zu Fig.7 und
- Fig. 9: einen Querschnitt durch einen Verteilkanal mit Dosieröffnungen in der Wand dieses Kanals.

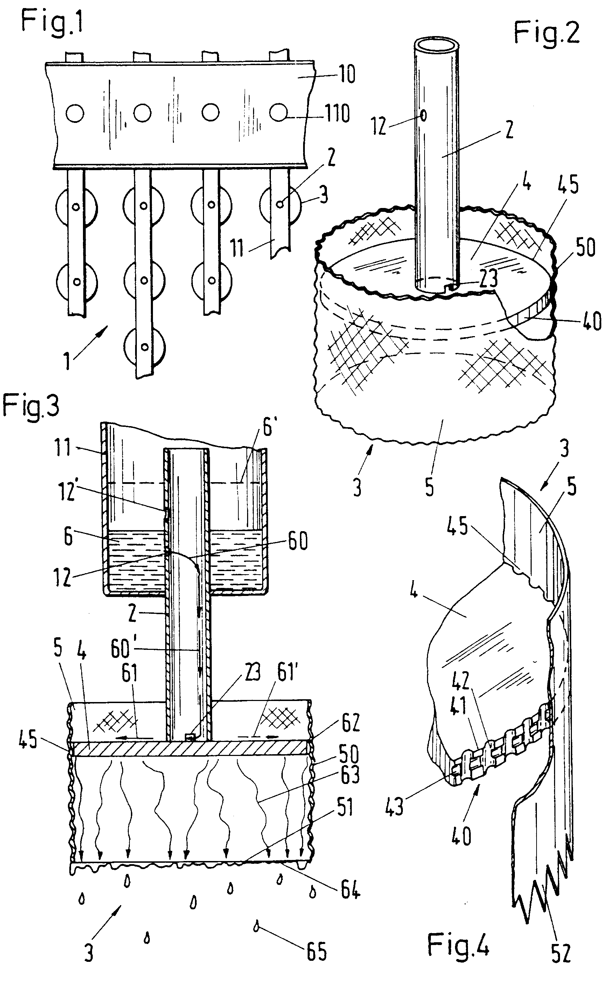

Fig.1 zeigt eine erste Ausführungsvariante eines Flüssigkeitsverteilers 1, der sich aus einem Hauptkanal 10 und darunter angeordneten Nebenkanälen 11 mit Feinverteilelementen 3 zusammensetzt. Der Flüssigkeitsübertritt vom Hauptkanal 10 zu den Nebenkanälen 11 erfolgt über Dosieröffnungen 110. Entsprechend sind die Feinverteilelemente 3 über Verbindungsstücke 2 mit den Nebenkanälen 11 verbunden, wobei in diesen Verbindungsstücken 2 die im Anspruch 1 genannten Flüssigkeits-Austrittsöffnungen oder Dosieröffnungen angeordnet sind.

In Fig.2 ist ein erstes Ausführungsbeispiel des Feinverteilelementes 3 zu sehen. Es weist folgende Komponenten auf: ein rohrförmiges Verbindungsstück 2 mit einer Dosieröffnung 12 und ein plattenförmiges, mit einer Leitwand 5 in Kontakt stehendes Element 4, zwischen dessen Rand 40 und der Leitwand 5 eine kommunizierende Kette von Kapillaröffnungen eine Verteil- und Abfliesszone 45 bildet, wobei diese Kette im vorliegenden Beispiel kreisförmig (oder auch ellipsenförmig) ist. Die Leitwand 5 ist aus einem folienartigen Material hergestellt, das durch Prägung erzeugte, rasterartig angeordnete Erhebungen und Vertiefungen aufweist. (Es würde an sich genügen, wenn die Oberflächenstrukturierung 50 lediglich auf der Seite der Verteil- und Abfliesszone 45 vorläge.) Am Übergang zwischen dem Verbindungsstück 2 und dem plattenförmigen Element 4 befindet sich mindestens eine Durchtrittsöffnung 23 für die zu verteilende Flüssigkeit.

Die Fig.3 zeigt, wie das im Längsschnitt dargestellte Feinverteilelement der Fig.2 am Nebenkanal 11 angebracht sein kann und wie die Flüssigkeit 6 verteilt wird. Die Flüssigkeit 6 ergiesst sich durch die Austrittsöffnung 12 (Pfeil 60) in das Innere des Rohrs 2, fliesst dort an der Innenwand (Pfeil 60') zur Durchtrittsöffnung 23 und bewegt sich anschliessend (Pfeile 61, 61') auf dem plattenförmigen Element 4 als Film oder als Rinnsal zur Verteil- und Abfliesszone 45, wo die Flüssigkeit aufgrund von Kapillarkräften über den gesamten Umfang der Zone 45 verteilt wird und dabei einen Flüssigkeitsring 62 bildet.

Das Rohr 2 kann selbstverständlich auch mehr als eine Austrittsöffnung aufweisen. In Fig.3 ist eine zweite Austrittsöffnung 12' gezeigt, die auf einem höheren Niveau als die Öffnung 12 angeordnet ist. Steigt das Niveau der Flüssigkeit 6 an (strichpunktierte Linie 6'), so vergrössert sich der Abfluss dank der höher gelegenen Austrittsöffnung 12'.

Dank der Wirkung der Kapillarkräfte kann der horizontale Flüssigkeitstransport auf dem plattenförmigen Element 4 ungleichmässig erfolgen. Daher muss die Oberfläche des Elements 4 nicht exakt horizontal ausgerichtet sein. Um eine möglichst gleichmässige Verteilung der Flüssigkeit 62 zu erhalten, sollte gleichwohl eine Abweichung von der horizontalen Lage klein gehalten werden. Auch ist es von Vorteil, wenn die flüssigkeitsleitende Oberfläche des plattenförmigen Elements 4 gut benetzbar ist.

Unterhalb der Verteil- und Abfliesszone 45 erfolgt auf der Leitwand 5 aufgrund der Oberflächenstrukturierung 50 eine weitere ausgleichende Querverteilung der Flüssigkeit. Die Linien 63 deuten den Strömungsverlauf der Flüssigkeit auf der Leitwand 5 an. Am unteren Rand 51 der Leitwand 5 bildet sich ein Flüssigkeitssaum 64 aus, von dem sich laufend einzelne Tropfen 65 ablösen.

Damit sich durch die Oberflächenstrukturierung 50 der Leitwand 5 eine gute Verteilwirkung ergibt, muss der Niveauunterschied zwischen den Scheiteln der Erhebungen und den Sohlen der Vertiefungen im Bereich zwischen 0.05 und 1.5 mm, vorzugsweise zwischen 0.3 und 0.6 mm, liegen. In der CH-PS 664 091 (= P.5928) ist ein Verfahren beschrieben, wie die Oberflächenstrukturierung 50 mittels Prägens hergestellt werden kann.

Bei der in der Fig.4 ausschnittsweise gezeigten zweiten Ausführungsform des Feinverteilelements 3 ist die Leitwand 5 aus einer glatten Folie hergestellt. Die Verteil- und Abfliesszone 45 ergibt sich aus einer Oberflächenstrukturierung, die am Rand 40 des plattenförmigen Elements 4 vorgesehen ist. Beim dargestellten Beispiel besteht diese Strukturierung aus zahnartigen Vorsprüngen 41 und den dazwischen liegenden Einkerbungen 42 sowie einer horizontalen Nut 43.

Am Beispiel der Fig.4 ist zusätzlich gezeigt, dass der untere Rand der Leitwand 5 gezackt, mit den Zacken 52, ausgebildet sein kann. Durch die Zacken 52, die auch nach aussen und/oder nach innen gebogen sein können, sind diskrete Tropfstellen gegeben.

In weiteren, nicht dargestellten Ausführungsformen der Erfindung kann die Leitwand 5 Löcher aufweisen, die auf die Querverteilung der Flüssigkeit einen positiven Effekt ausüben. Die Leitwand 5 kann auch aus einem Drahtgewebe hergestellt sein, oder sie kann zweilagig aus einer undurchlässigen Folie und einem innenseitigen Drahtgewebe bestehen.

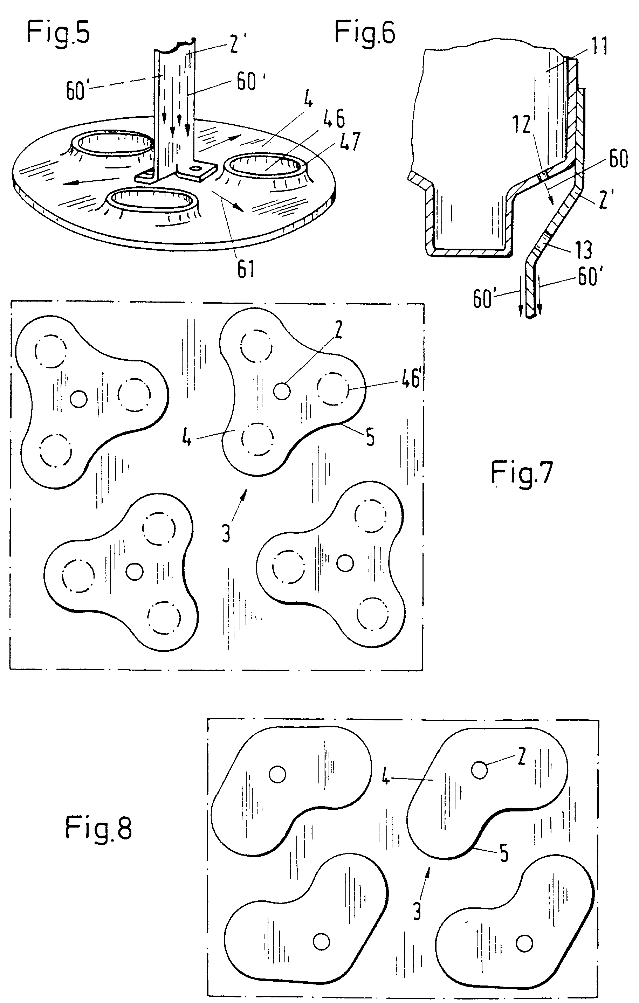

Damit in einer Stoffaustauschkolonne, in dem ein erfindungsgemässer Flüssigkeitsverteiler angeordnet ist, auf die nach oben strömende Gasphase ein verringerter Strömungswiderstand wirkt, können die plattenförmigen Elemente 4 zusätzlich mit Durchbrüchen 46 versehen sein, wie dies in Fig.5 gezeigt ist. Ein Abfliessen der zu verteilenden Flüssigkeit durch solche Durchbrüche 47 kann beispielsweise mittels hochgezogener Ränder 47 verhindert werden.

In Fig.5 ist auch gezeigt, dass anstelle des rohrförmigen Verbindungsstücks 2 ein Streifen 2' vorgesehen werden kann, der sowohl als Befestigungsmittel des Feinverteilers 3 als auch als Abflussfläche für die Flüssigkeit (Pfeile 60') dient. Wie in Fig.6 dargestellt, kann die Austrittsöffnung 12 des Verteilkanals 11 einen gewissen Abstand vom Verbindungsstück 2' aufweisen, der durch einen freien Strahl (Pfeil 60) überbrückt wird.

Durch eine Öffnung 13 kann ein Teil der Flüssigkeit auf die andere Seite des Verbindungsstücks 2' gelangen. Die Flüssigkeit kann auch als freier Strahl von der Austrittsöffnung 12 direkt auf das plattenförmige Element 4 gerichtet sein.

Die Figuren 7 und 8 zeigen Ausschnitte aus Anordnungen von jeweils vier Feinverteilelementen, deren Formen stark von der Kreisform abweichen. Die plattenförmigen Elemente 4 weisen eckenlose Randlinien auf. Die Krümmungsradien der Randlinie sind vorzugsweise grösser als rund 5 mm. Die Randlinien weisen ferner sowohl konvexe als auch konkave Bereiche auf. Bei den Feinverteilelementen der Fig.7 sind strichpunktiert Durchbrüche 46' (vgl. Fig.5) angedeutet.

Die Feinverteilelemente der Figuren 7 und 8 sind ihrer Form entsprechend derart in der Kolonne angeordnet, dass die durch die Leitwände gegebenen Tropfstellen weitgehend gleichmässig über den Kolonnenquerschnitt verteilt sind.

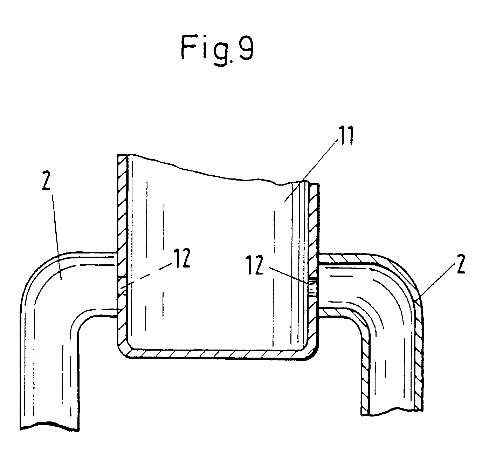

Fig. 9 zeigt einen Querschnitt durch einen Verteilkanal 11 mit Dosieröffnungen 12, die in der Wand dieses Kanals 11 angeordnet sind. Durch die Öffnungen 12 tritt die zu verteilende Flüssigkeit 6 jeweils in gebogene rohrförmige Verbindungsstücke 2 ein, welche die nicht dargestellten plattenförmigen Elemente von Feinverteilern mit dem Verteilkanal 11 verbinden. Die Dosieröffnungen 12 können auch im Boden des Verteilkanals 11 vorgesehen sein.

## Patentansprüche

1. Flüssigkeitsverteiler (1) für Kolonnen, mit Flüssigkeits-Austrittsöffnungen (12) und diesen zugeordneten Feinverteilelementen (3), die jeweils eine Leitwand (5) umfassen,
dadurch gekennzeichnet, dass in jedem Feinverteilelement ein plattenförmiges, mit der Leitwand in Kontakt stehendes Element (4) angeordnet ist, zwischen dessen Rand (40) und der Leitwand eine kommunizierende Kette von Kapillaröffnungen eine Verteil- und Abfliesszone (45) bildet, wobei sich diese Kette entlang einer horizontalen, geschlossenen Kurve erstreckt, und dass jede Austrittsöffnung (12) eine Dosieröffnung ist, mittels der eine vorbestimmbare Flüssigkeitsmenge in das zugeordnete Feinverteilelement abgebbar ist.

2. Flüssigkeitsverteiler nach Anspruch 1, dadurch gekennzeichnet, dass die Leitwände (5) aus einem folienartigen Material hergestellt sind.

3. Flüssigkeitsverteiler nach Anspruch 1 oder 2, dadurch gekennzeichnet, dass das folienartige Material mindestens auf der Seite der Verteil- und Abfliesszone (45) eine Oberflächenstrukturierung (50) mit rasterartig angeordneten Erhebungen und Vertiefungen aufweist.

4. Flüssigkeitsverteiler nach Anspruch 3, dadurch gekennzeichnet, dass das folienartige Material mittels Prägung strukturiert ist.

5. Flüssigkeitsverteiler nach einem der Ansprüche 1 bis 4, dadurch gekennzeichnet, dass der Rand (40) des plattenförmigen Elements (4) bei der Verteil- und Abfliesszone (45) Einkerbungen und Vorsprünge (41, 42, 43) aufweist.

6. Flüssigkeitsverteiler nach einem der Ansprüche 3 bis 5, dadurch gekennzeichnet, dass der Niveauunterschied zwischen den Scheiteln der Erhebungen bzw. Vorsprüngen und den Sohlen der Vertiefungen bzw. Einkerbungen im Bereich zwischen 0.05 und 1.5 mm, vorzugsweise zwischen 0.3 und 0.6 mm, liegt.

7. Flüssigkeitsverteiler nach einem der Ansprüche 1 bis 6, dadurch gekennzeichnet, dass die plattenförmigen Elemente (4) flüssigkeitsleitende Oberflächen aufweisen, die gut benetzbar sind.

8. Flüssigkeitsverteiler nach einem der Ansprüche 1 bis 7, dadurch gekennzeichnet, dass jedem Feinverteilelement neben einer ersten Dosieröffnung (12) mindestens eine zweite Dosieröffnung (12') zugeordnet ist, die gegenüber der ersten auf einem anderen Niveau liegt.

9. Flüssigkeitsverteiler nach einem der Ansprüche 1 bis 8, dadurch gekennzeichnet, dass die plattenförmigen Elemente (4) kreisförmig oder elliptisch sind, wobei die Durchmesser Werte in der Grössenordnung von 10 cm aufweisen.

10. Flüssigkeitsverteiler nach einem der Ansprüche 1 bis 8, dadurch gekennzeichnet, dass die plattenförmigen Elemente (4) jeweils eine eckenlose Randlinie aufweisen, wobei die Krümmungsradien der Randlinie vorzugsweise grösser als rund 5 mm sind.

11. Flüssigkeitsverteiler nach Anspruch 10, dadurch gekennzeichnet, dass die Randlinie des plattenförmigen Elements (4) konvexe sowie konkave Bereiche aufweist.

12. Flüssigkeitsverteiler nach einem der Ansprüche 1 bis 11, dadurch gekennzeichnet, dass die plattenförmigen Elemente (4) jeweils mindestens einen Durchbruch (46) mit aufgebogenem Rand (47) aufweisen.

13. Flüssigkeitsverteiler nach einem der Ansprüche 1 bis 12, dadurch gekennzeichnet, dass die plattenförmigen Elemente (4) jeweils über ein Verbindungsstück (2) mit einem Verteilkanal (11) verbunden sind, dass die Dosieröffnungen (12) in den Wänden oder im Boden des Verteilkanals angeordnet sind und dass die Dosieröffnungen bezüglich den Verbindungsstücken derart angeordnet sind, dass die zu verteilende Flüssigkeit jeweils über das Verbindungsstück zum plattenförmigen Element leitbar ist.

14. Flüssigkeitsverteiler nach einem der Ansprüche 1 bis 12, dadurch gekennzeichnet, dass die plattenförmigen Elemente (4) jeweils über ein rohrförmiges Verbindungsstück (2) mit einem Verteilkanal (11) verbunden sind und dass mindestens ein Loch (12, 12') in der Wand dieses Verbindungsstücks eine der Dosieröffnungen bildet.

15. Kolonne mit Flüssigkeitsverteilern nach einem der Ansprüche 1 bis 14, dadurch gekennzeichnet, dass die Feinverteilelemente (3) eine besondere Formgebung aufweisen und ihrer Form entsprechend derart angeordnet sind, dass die durch die Leitwände (5) gegebenen Tropfstellen weitgehend gleichmässig über den Kolonnenquerschnitt verteilt sind.

## Claims

1. Liquid distributor (1) for columns, with liquid outlet openings (12) and fine distribution elements (3) associated with them, which each include a guide wall (5), characterised in that a plate-like element (4) standing in contact with the guide wall is arranged in each fine distribution element, with a communicating chain of capillary openings between the edge (40) of the element (4) and the guide wall forming a distribution and drain zone (45) with this chain extending along a horizontal, closed curve, and in that each outlet opening (12) is a metering opening by means of which a preselectable amount of liquid can be supplied into the associated fine distribution element.

2. Liquid distributor in accordance with claim 1, characterised in that the guide walls (5) are made from a foil-like material.

3. Liquid distributor in accordance with claim 1 or 2, characterised in that the foil-like material has a surface structure (50) with projections and recesses which are arranged in a grid-like manner at least at the side of the distribution and drain zone (45).

4. Liquid distributor in accordance with claim 3, characterised in that the foil-like material is structured by embossing.

5. Liquid distributor in accordance with one of the claims 1 to 4, characterised in that the edge (40) of the plate-like element (4) has recesses and projections (41, 42, 43) at the distribution and drain zone (45).

6. Liquid distributor in accordance with one of the claims 3 to 5, characterised in that the difference in level between the apices of the raised portions or projections and the bases of the recesses or channels lies in the region between 0.05 and 1.5 mm, preferably between 0.3 and 0.6 mm.

7. Liquid distributor in accordance with one of the claims 1 to 6, characterised in that the plate-like elements (4) have liquid-conducting surfaces which can easily be wetted.

8. Liquid distributor in accordance with one of the claims 1 to 7, characterised in that at least a second metering opening (12') is associated with each fine distribution element in addition to a first metering opening (12), with the second metering opening (12') lying at a different level from the first.

9. Liquid distributor in accordance with one of the claims 1 to 8, characterised in that the plate-like elements (4) are circular or elliptical, with the diameter having values in the order of magnitude of 10 cm.

10. Liquid distributor in accordance with one of the claims 1 to 8, characterised in that the plate-like elements (4) respectively have an edge line without corners, with the radii of curvature of the edge line preferably being larger than approximately 5 mm.

11. Liquid distributor in accordance with claim 10, characterised in that the edge line of the plate-like elements (4) has convex as well as concave regions.

12. Liquid distributor in accordance with one of the claims 1 to 11, characterised in that the plate-like elements (4) respectively have at least one opening (46) with a turned up edge (47).

13. Liquid distributor in accordance with one of the claims 1 to 12, characterised in that the plate-like elements (4) are respectively connected to a distribution channel (11) via a connection piece (2), in that the metering openings (12) are arranged in the walls or in the bottom of the distribution channel, and in that the metering openings are arranged with respect to the connection pieces such that the liquid to be distributed can be respectively guided to the plate-like element via the connection piece.

14. Liquid distributor in accordance with one of the claims 1 to 12, characterised in that the plate-like elements (4) are respectively connected to a distribution channel (11) via a tubular connection piece (2), and in that at least one hole (12, 12') in the-wall of this connection piece forms one of the metering openings.

15. Column with liquid distributors in accordance with one of the claims 1 to 14, characterised in that the fine distribution elements (3) have a special shape and are arranged corresponding to their shape such that the drip points given by the guide walls (5) are largely uniformly distributed over the column cross-section.

## Revendications

1. Dispositif de distribution de liquide (1) pour des colonnes, avec des ouvertures de sortie de liquide (12) et des éléments de distribution fine (3) associés à celles-ci qui entourent respectivement une paroi conductrice (5), caractérisé en ce qu'il est disposé dans chaque élément de distribution fine un élément (4) en forme de plaque, en contact avec la paroi conductrice, entre le bord duquel (40) et la paroi conductrice, une chaîne communicante d'ouvertures capillaires forme une zone de distribution et d'écoulement (45), cette chaîne s'étendant le long d'une courbe horizontale fermée, et en ce que chaque ouverture de sortie (12) est une ouverture de dosage au moyen de laquelle une quantité de liquide pouvant être déterminée préalablement peut être émise dans l'élément de distribution fine associé.

2. Dispositif de distribution de liquide selon la revendication 1, caractérisé en ce que les parois conductrices (5) sont réalisées en un matériau en forme de feuille.

3. Dispositif de distribution de liquide selon la revendication 1 ou 2, caractérisé en ce que le matériau en forme de feuille présente au moins sur le côté de la zone de distribution et d'écoulement (45) une structure de surface (50) avec des surélévations et creux disposés en forme de grille.

4. Dispositif de distribution de liquide selon la revendication 3, caractérisé en ce que le matériau en forme de feuille est structuré par matriçage.

5. Dispositif de distribution de liquide selon l'une des revendications 1 à 4, caractérisé en ce que le bord (40) de l'élément en forme de plaque (4) présente dans la zone de distribution et d'écoulement (45) des encoches et des saillies (41, 42, 43).

6. Dispositif de distribution de liquide selon l'une des revendications 3 à 5, caractérisé en ce que la différence de niveau entre les sommets des surélévations et, respectivement les saillies et les fonds des creux et, respectivement encoches se situe dans la zone comprise entre 0,05 et 1,5 mm, de préférence entre 0,3 et 0,6 mm.

7. Dispositif de distribution de liquide selon l'une des revendications 1 à 6, caractérisé en ce que les éléments en forme de plaque (4) présentent des surfaces conductrices de liquide qui peuvent être mouillées d'une manière appropriée.

8. Dispositif de distribution de liquide selon l'une des revendications 1 à 7, caractérisé en ce qu'il est associé à chaque élément de distribution fine, à part une première ouverture de dosage (12), au moins une deuxième ouverture de dosage (12') qui se situe par rapport à la première à un autre niveau.

9. Dispositif de distribution de liquide selon l'une des revendications 1 à 8, caractérisé en ce que les éléments en forme de plaque (4) sont circulaires ou elliptiques, les diamètres ayant des valeurs dans l'ordre de grandeur de 10 cm.

10. Dispositif de distribution de liquide selon l'une des revendications 1 à 8, caractérisé en ce que les éléments en forme de plaque (4) présentent respectivement une ligne de bord sans coin, les rayons de courbure de la ligne de bord étant de préférence supérieurs à environ 5 mm.

11. Dispositif de distribution de liquide selon la revendication 10, caractérisé en ce que la ligne de bord de l'élément en forme de plaque (4) présente des zones convexes et concaves.

12. Dispositif de distribution de liquide selon l'une des revendications 1 à 11, caractérisé en ce que les éléments en forme de plaque (4) présentent chacun au moins un perçage (46) avec un bord relevé (47).

13. Dispositif de distribution de liquide selon l'une des revendications 1 à 12, caractérisé en ce que les éléments en forme de plaque (4) sont reliés respectivement par une pièce de liaison (2) à un canal de distribution (11), en ce que les ouvertures de dosage (12) sont disposées dans les parois ou dans le fond du canal de distribution, et en ce que les ouvertures de dosage sont disposées relativement aux pièces de liaison de telle sorte que le liquide à distribuer puisse être guidé respectivement par la pièce de liaison à l'élément en forme de plaque.

14. Dispositif de distribution de liquide selon l'une des revendications 1 à 12, caractérisé en ce que les éléments en forme de plaque (4) sont reliés respectivement par une pièce de liaison tubulaire (2) à un canal de distribution (11), et en ce qu'au moins un trou (12, 12') dans la paroi de ces pièces de liaison forme l'une des ouvertures de dosage.

15. Colonne comportant des dispositifs de distribution de liquide selon l'une des revendications 1 à 14, caractérisé en ce que les éléments de distribution fine (3) ont une configuration particulière et sont disposés en fonction de leur forme de telle sorte que les points d'égouttement générés par les parois conductrices (5) soient distribués dans une grande mesure uniformément sur la section transversale de la colonne.
